# EUROPEAN PATENT SPECIFICATION

(11) **EP 1 027 128 B1**
(45) Date of publication and mention of the grant of the patent: **26.09.2001**
(21) Application number: 98947704.7
(22) Date of filing: 15.10.1998
(51) Int. Cl.: B01D 33/15, B01D 33/80, B01D 33/39

(54) **ROTARY DISC FILTRATION APPARATUS**
FILTERANLAGE MIT ROTIERENDEN RINGSCHEIBEN
APPAREIL DE FILTRATION A DISQUE ROTATIF

(30) Priority: 20.10.1997 IT VI970178
(43) Date of publication of application: 16.08.2000
(73) Proprietor: S.C. COSTRUZIONI MECCANICHE di Calattini Roberto e Scardigli Fabio S.n.c., 50023 Empoli (Florence) (IT)
(72) Inventor: S.C. COSTRUZIONI MECCANICHE di Calattini Roberto e Scardigli Fabio S.n.c., 50023 Empoli (Florence) (IT)
(74) Representative: Bardini, Marco Luigi
(86) International application number: IB9801616
(87) International publication number: WO9920367

(56) References cited:
- EP-A- 0 293 350
- EP-A- 0 307 700
- EP-A- 0 388 709
- WO-A-92/13625
- US-A- 3 998 735

## Description

### Technical field

The present invention concerns the field of rotary disc filtration apparatuses, specifically adapted to filter solid particles suspensions.

Waste water generated by several industrial process have a polluting capacity due either to organic or inorganic solid materials in suspension.

Exemplary sources of such polluting process are the tanning industry whose waste waters contain hair and flesh remnants, the textile industry whose waste water contains fibres and organic material originating from wool washing, the food and wood industry.

Waste water produced by such industrial plants, before undergoing possible biochemical treatments that would allow their discharge in the sewerage, must be preliminary filtered so that all solid suspended elements can be separated beforehand.

### Background art

Not considering gravity separation by means of settling tanks, the mostly used apparatuses for separating solids in suspension are devices with rotating filters in which waters to be treated and containing suspended solids are let flow through a series of disc-shaped filter elements which are driven into rotation inside appropriate vessels.

In particular, a disc rotating filtering device of the kind used to that end has a vessel containing one or more pairs of filter discs spaced and substantially coaxial, whereby the discs of each pair are connected by means of a rigid central shaft driven into rotation by external driving means.

Each pair of discs is capable of creating watertight contact with the bottom of the vessel in which the discs are contained in such a way to define, in the space between the filter discs of each pair and the vessel surface, a filter chamber in which the water to be filtered is made flow.

Usually such apparatuses contain more than one pair of filter discs, so that they define several filtration chambers, through each of which the water to be treated is fed.

The filter discs generally have a substantially plane or slightly conical shape so that they can retain the solids found in suspension in the water flowing through them. The retentate deposited on the filter surface accumulate inside the filtering chamber, while the filtrate is collected outside and is led through the following treatment steps.

During disc rotation, the volume of the solids deposited on them tend to increase and are continuously removed by effect of disc rotation. The machine is thus self-cleaning and maintains its filtering capacity nearly unchanged during the whole filtration process.

The accumulated retentate is automatically expelled when its level reaches the inlet of a discharging duct leading away from the vessel.

Even though the rotary disc filtration apparatuses of the kind described above carry out satisfactorily their tasks, they have some recognized drawbacks.

A first disadvantage is the fact that the usable surface of each filter disc does not correspond to the complete surface of the disc itself, as it is reduced by the presence of a flange connecting it to the central shaft which connects the pair of filter discs to each other and to the driving means promoting their rotation.

The filter surface is further reduced by the presence of radial arms arranged between rotation axis and periphery of each filtering disc.

Another disadvantage is the fact the maintenance of such machines is long and labourious because, in order to disassemble the rotating discs, they must be extracted from the vessel where they are contained in pairs, after disassembling the driving means.

EP-A-0 388 709 discloses a filtering machine of the type described above, and as defined in the pre-characterising portion of the appended claim 1.

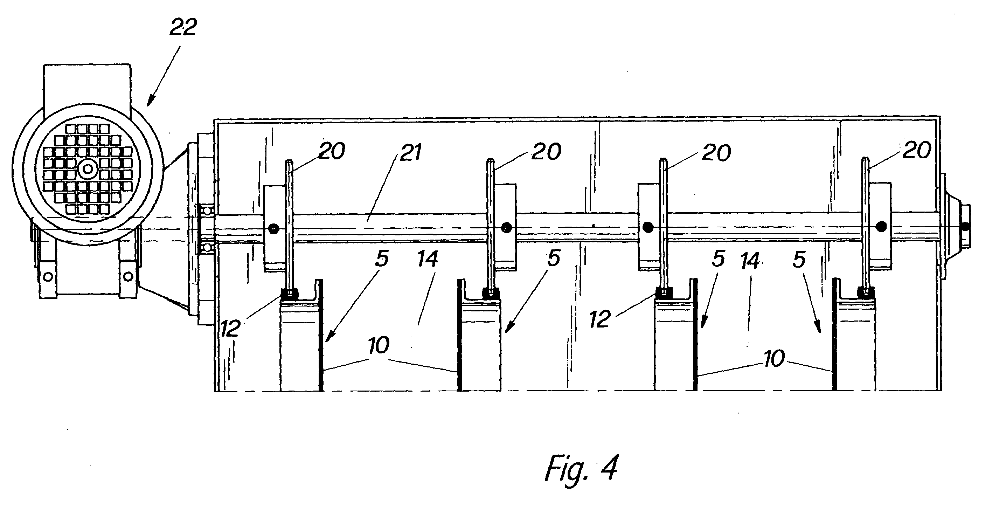

WO 92/13625 discloses a filtration unit which comprises an open-top container (1), at least one flat, circular filter wheel (20) comprising a frame (21) and a filter (22), provided in the container, and a drive mechanism for rotation of the filter wheel. The frame (21) comprises two annular ring parts between which the filter (22) is tightened and secured (Figs. 4). One annular ring part is provided with teeth for being driven by a motor (52) via a tooth wheel (51), and the other annular ring part, whose diameter is greater than the other ring part, slidingly abuts against the bottom (9) of a track defined in the container. The opposite exterior lateral surfaces (23,24) of the annular ring parts slide against the opposite lateral surfaces (27,28) of the track in which grooves for sealing strips (25,26) are provided.

US-A-3998735 discloses a filter assembly (11) comprising a filter element (16) rotatable by means of driven endless drive belts (22).

### Disclosure of the invention

The primary object of the present invention is to eliminate the above mentioned drawbacks by means of a rotary disc filtration apparatus providing an increased filtering capacity while maintaining the same dimensions of the rotating discs.

Another object of the invention is to provide a filtering apparatus which can be more rapidly and easily assembled and disassembled compared to other similar apparatuses, so as to facilitate maintenance operations.

Another object is to provide a filtering apparatus with simpler and more reliable structure compared to apparatuses of the same kind.

Yet another important object of the invention is to provide an apparatus with a reduced power consumption compared to other known filtering machines for comparable quantity of treated water.

In accordance with the invention, there is provided a rotary disc filtration apparatus, particularly for filtering liquids containing solid particles in suspension, which comprises:
- a vessel defining an internal surface,
- at least one inlet opening for the liquid to be filtered and at least one outlet opening for the filtered liquid,
- at least one pair of filter discs of substantially planar configuration, coaxially assembled and axially spaced, rotatably supported in said vessel, and
- each disc having a peripheral portion co-operating with at least a part of said internal vessel surface in such a way to delimit a respective filtration chamber,
the apparatus being characterised in that each of said filter discs is peripherally supported internally to said vessel, each disc comprising an annular frame having at least a filtering surface fixed to said frame, capable of covering completely and continuously the area defined internally to said frame, said vessel having a cover closing the upper side thereof, there being provided for each filter disc at least one upper pinion co-operating with an external peripheral portion of the respective annular frame, all said upper pinions being fixed on a driving shaft journalled on said cover.

In a preferred embodiment, the apparatus comprises rolling means capable of supporting and guiding each disc in a substantially vertical plane, said rolling means being arranged substantially near the external peripheral edge portion of the respective annular frame.

The rolling means comprise preferably for each filter disc at least a pair of idle lower pinions rotatably fixed in the lower part of said vessel.

A filtering apparatus of the kind above described allows the disassembling of each single filtering disc. Moreover it allows the installation of driving means with lower power compared with filtering apparatuses having axial drive.

### Brief description of the drawings

Further advantages and aspects of the invention will become more evident from the detailed description of a preferred but non exclusive embodiment of a rotary disc filtration apparatus, hereafter shown by way of non-limitative example by means of the accompanying drawings, in which:
Fig. 1 shows a sectional view of a filtration apparatus according to the invention;

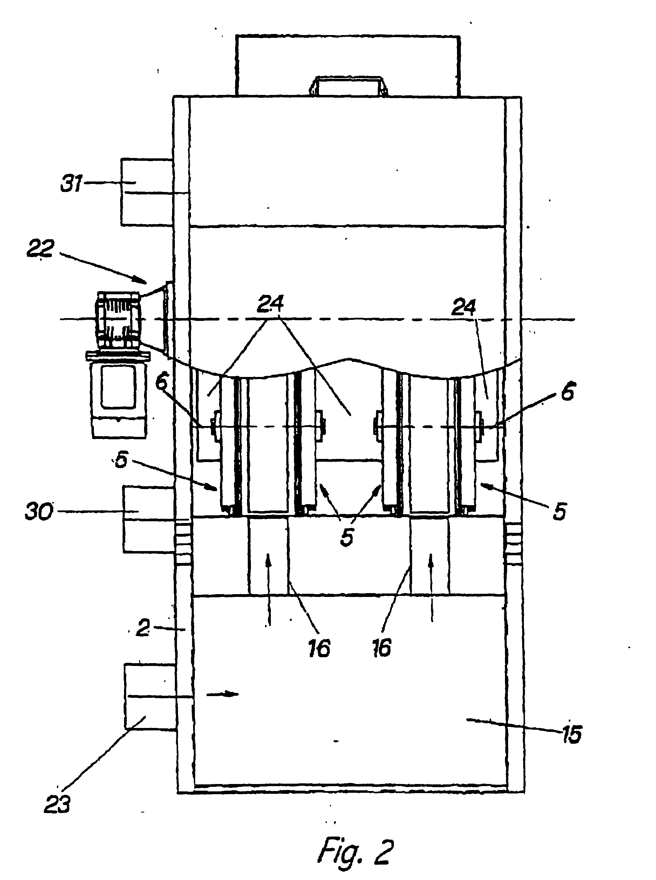

Fig 2 shows a view from above of the apparatus of Fig.1;
Fig. 3 shows a sectional view of the apparatus illustrated in Fig. 1 and 2;
Fig. 4 shows an enlarged view of a detail of the apparatus according to the former figures;

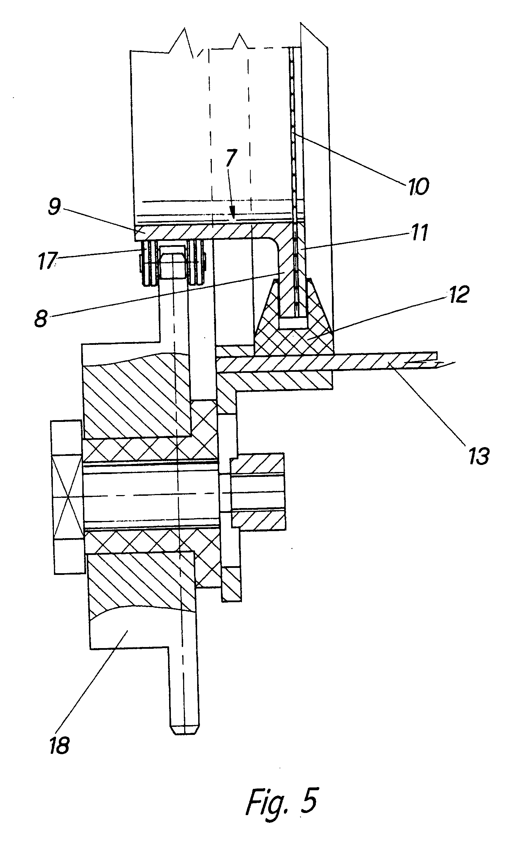

Fig. 5 shows a longitudinal section view of another detail;

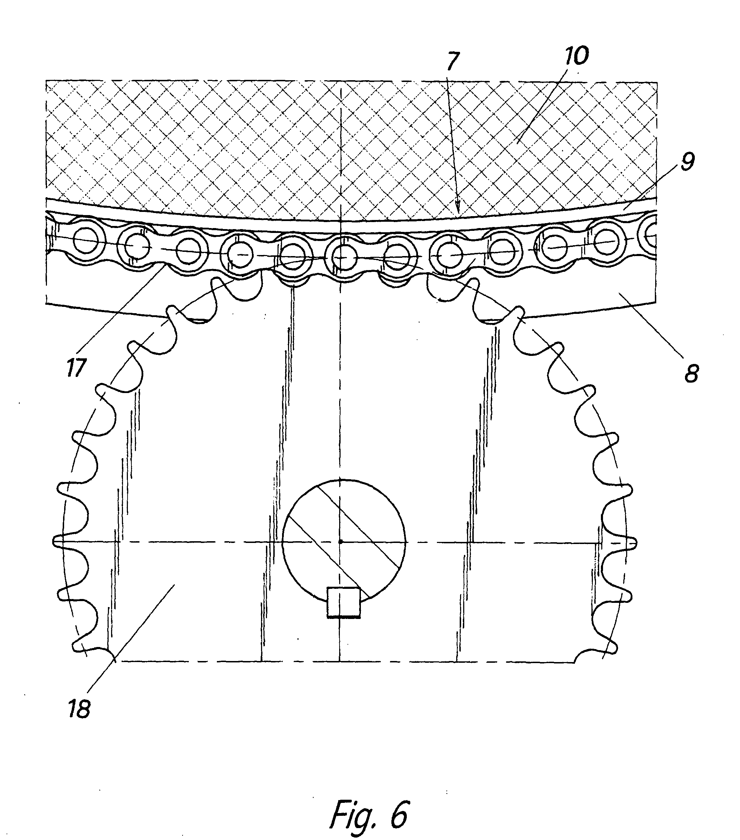

Fig. 6 shows a front view of a detail of the apparatus illustrated in Fig. 4.

### Detailed Description of a Preferred Embodiment

With reference to the figures, the filtrating apparatus according to the invention, generally identified with the reference number 1, comprises a vessel 2 having an approximately parallelepiped shape, open at the upper side and closed by means of a cover 3 hingedly connected at one end by means of a pin 4.

Inside vessel 2 there are located one or more pairs of filter discs 5 substantially identical and set in front of each other, axially spaced and capable of revolving around an axis 6 substantially horizontal.

Each of the filtrating discs 5 essentially comprises an annular frame 7 made, by way of example, of an L- shaped profile, so shaped to define a planar circular portion 8 substantially perpendicular to the disc rotation axis 6 and connected to a cylindrical portion 9 substantially parallel to said disc rotation axis 6.

A filtrating surface 10, completely covering the area defined by the annular frame 7, is connected to the cylindrical portion 8 of said frame 7 by means of an annular flange 11 which in turn is connected to the frame 7 by removable fixing means.

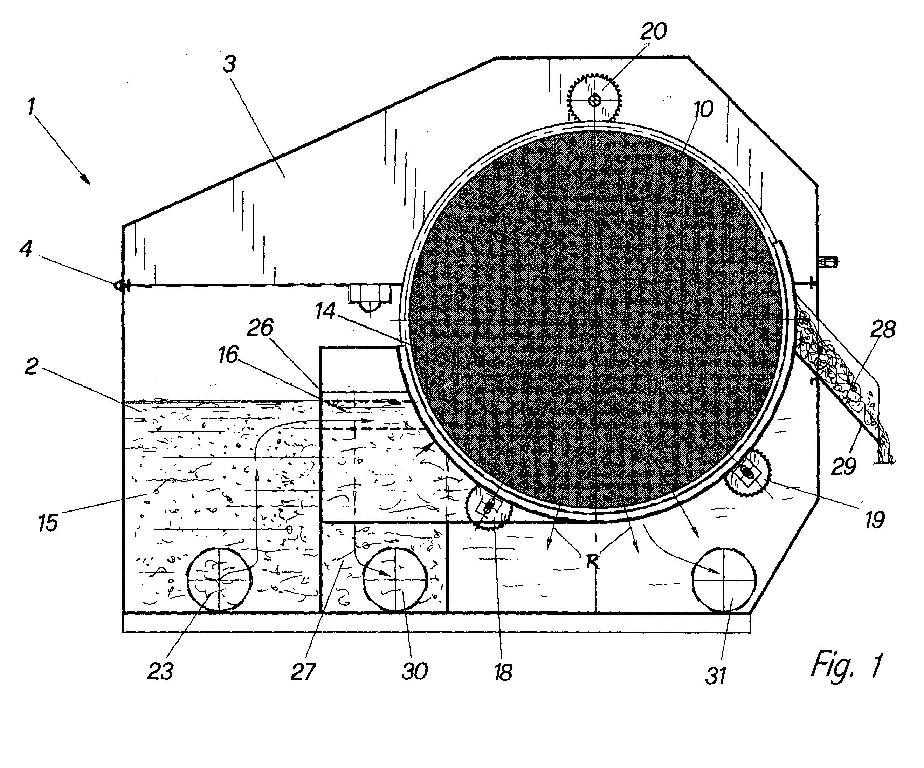

The filtrating surface 10 preferably comprises a mesh of metallic or synthetic wires, shown in detail in Fig 1, with the mesh density being determined according to the dimensions of solids suspended in the liquid and on the degree of filtration desired.

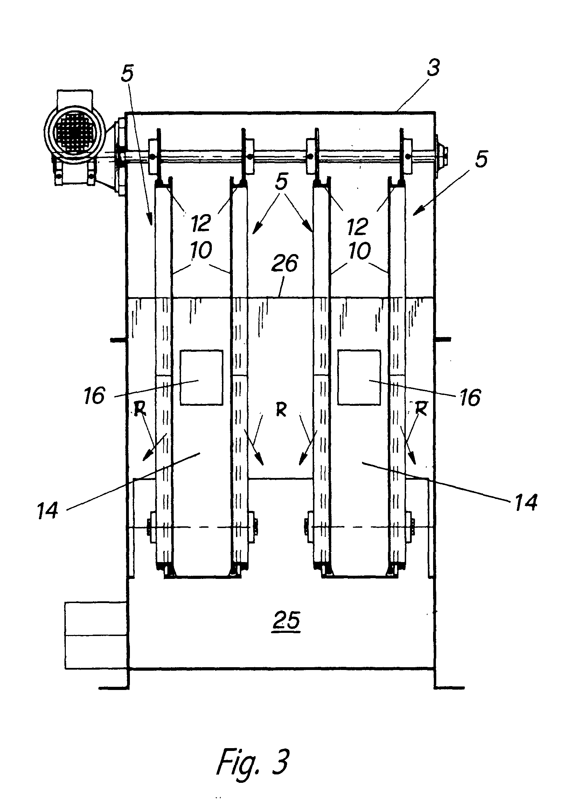

An annular U-shaped packing 12 is fixed on the planar circular portion 8 and on the flange 11 and said packing 12 which co-operates with the internal surface 13 of the vessel 2 during the rotation of the respective disc. In this manner, as shown in Figures 3 and 4, each pair of disc defines therebetween a filtering chamber 14 communicating with a collecting chamber 15 for the liquid to be treated by means of a respective duct 16.

A chain portion 17 with closed rings is fixed, preferably by welding, on the cylindrical portion 9 of the annular frame 7. The chain 17 defines a toothed member adapted to engage with several pinions 18,19,20. Particularly some pinions 18, 19 can rotate idle and are preferably located under the disc rotation axis 6, while one or more other pinions 20 are solidly fixed to the cover 3 and are located above the disc rotation axis 6.

Pinions 18, 19 located under the disc rotation axis provide preferably support and guide to the filter disc 5 while the pinions located above the disc rotation axis preferably provide driving means to filter disc 5.

To this purpose, the upper pinions 20 are fixed to at least a driving shaft 21 which is in turn journalled on cover 3. The shaft 21 has sufficient length L to enable it to engage all pairs of filter discs 5 comprised in the apparatus described and is preferably connected to reduction gear means fixed to the cover.

The collector chamber 15 comprises an inlet pipe 23 and communicates with the filtration chambers 14 through ducts 16. Each filtration chamber 14 is provided with lower openings 24 through which the liquid is led to the filtrate chamber 25, in the direction of arrows R, after passing through the filtration surfaces 10. Every filtration chamber 14 is provided with an overflow edge 26 through which the liquid in excess overflows and is collected in an overflow chamber 27. Each filtration chamber 14 is also provided with an outlet opening 28, having a take-off chute 29 for discharging the retentate, preferably at the opposite side of the inlet opening reserved for the liquid to be filtered.

The overflow chamber 27 is provided with an outlet duct 30 communicating with the collecting chamber 15 to allow flow back of the liquid to be filtered. By flowing through the filtration surface 10, the liquid separates from the suspended solid particles, which gather in the filtration chambers 14 while the permeate is collected in the filtrate chamber 25, substantially free from particles, and subsequently is discharged through the outlet duct 31.

In operation, the solid material retained by the filtration surfaces 10, cumulating in the filtration chambers 14 is continuously mixed by effect of filter discs 5 rotation. This provides a self-cleaning effect for the filtration surfaces 10 which maintain unchanged their filtering capacity.

When the solid gathered inside the filtration chambers 14 reaches the level of the outlet opening 28, it is discharged by means of gravity on the take-off chute 29.

From what described hereto forth, it is apparent that the apparatus according to the invention achieves all the stated objects, more particularly by keeping the same quantity and dimensions of filter discs a better filtration effect and a higher filtration efficiency is achieved on the liquid to be filtered. This is due to the fact that the filtration effect is provided on the whole disc surface, internally to the annular frame 7, as this surface is not reduced by any central shaft or flange.

The claimed structure further allows an easier maintenance of the apparatus, thus achieving another purpose of the invention, by the fact that each of the filtration discs is supported by the lower pinions and is driven into rotation by the upper pinions, because of lack of a central mechanical shaft. As a consequence, in order to disassemble the filtration discs from the vessel, it is sufficient to open the cover and extract the discs from the vessel itself.

The driving means according to the invention, achieved by means of pinions engaging on a chain peripherally arranged on each filter disc provides a solution to the problem of axial retention of the discs themselves, as the sides of the chain that engage in the teeth of the pinions do not allow axial displacements of the same discs.

Moreover, through these means, the invention achieves the object of reducing the driving power necessary for driving into rotation the filter discs. Simple considerations, based on the principles of mechanics, show clearly that, for the same filter disc dimension and same number of revolutions per unit of time, the drive transmission by means of peripheral pinions engaging a peripheral chain, requires a lower power compared to the arrangement where the driving power is transmitted through a shaft co-axial to the filter discs.

From a constructional point of view, it is evident that the apparatus according to the invention can contain as many discs as it is necessary to achieve the necessary filtering effect, depending on the quantity and type of liquid to be filtered.

## Claims

1. A rotary disc filtration apparatus, particularly for filtering liquids containing solid particles in suspension comprising:
- a vessel (2) defining an internal surface (13),
- at least one inlet opening (23) for the liquid to be filtered and at least one outlet opening (31) for the filtered liquid,
- at least one pair of filter discs (5) of substantially planar configuration, coaxially assembled and axially spaced, rotatably supported in said vessel,
- each disc (5) having a peripheral portion (8) co-operating with at least a part of said internal vessel surface (13) in such a way to delimit a respective filtration chamber (14),
**characterised in that** each of said filter discs (5) is peripheraly supported internally to said vessel (2), each disc (5) comprising an annular frame (7) having at least a filtering surface (10) fixed to said frame (7), capable of covering completely and continuously the area defined internally to said frame, said vessel having a cover (3) closing the upper side thereof, there being provided for each filter disc (5) at least one upper pinion (20) co-operating with an external peripheral portion of the respective annular frame (7), all said upper pinions (20) being fixed on a driving shaft (21) journalled on said cover (3).

2. Filtration apparatus according to claim 1, **characterised in that** said driving shaft (21) in turn is connected to reduction gear means (22) solidly fixed to said cover (3).

3. Filtration apparatus according to claim 1, **characterised in that** said cover is hingedly connected with one end thereof to said vessel (2).

4. Filtration apparatus according to claim 1, **characterised in that** there are rolling means (18-20) arranged substantially proximate to the external peripheral edge portion of the respective annular frame (7) to support and guide each disc in a substantially vertical plane.

5. Filtration apparatus according to claim 4, **characterised in that** said rolling means comprise, for each filter disc (5), at least one pair of idle pinions (18,19) rotatably fixed in the lower part of said vessel (2).

6. Filtration apparatus according to claims 1 and 4, **characterised in that** an endless chain (17) is fixed on the cylindrical portion (9) of the annular frame (7) of each filter disc (5) in such way to define a gear means suitable to engage with said pair of lower pinions (18, 19) and said upper pinion (20).

7. Filtration apparatus according to claim 1, **characterised in that** the filtering surface (10) of each disc is fixed by means of an annular flange (11) superposed and solidly fixed to the planar edge portion (8).

8. Filtration apparatus according to claim 7, **characterised in that** each filter disc (5) has an annular packing seal (12) solidly fixed to the planar edge portion (8) of said frame (7) for providing a watertight seal between the filter disc and a cylindrical portion of said internal vessel surface (13).

9. Filtration apparatus according to claim 1, **characterised in that** said vessel (2) comprises internally thereof a collecting chamber (15), for collecting the liquid to be filtered, communicating through a duct (16) with a filtration chamber (14), at least an overflow chamber (27) communicating with said collecting chamber (15) by means of an overflow opening (26) and at least a filtrate chamber (25) communicating with each filtration chamber (14) through the respective filter surfaces (10).

## Patentansprüche

1. Filtervorrichtung mit rotierenden Scheiben, insbesondere zum Filtern von Flüssigkeiten, in denen Feststoffpartikel suspendiert sind, mit
- einem eine Innenfläche (13) aufweisenden Behälter (2),
- zumindest einer Einlaßöffnung (23) für die zu filternde Flüssigkeit und zumindest einer Auslaßöffnung (31) für die gefilterte Flüssigkeit,
- zumindest einem Paar Filterscheiben (5), die im wesentlichen eben ausgebildet sind, koaxial voneinander beabstandet angeordnet sind und im Behälter drehbar gelagert sind,
- der Ausbildung jeder Scheibe (5) so, dass sie einen Umfangsabschnitt (8) aufweist, der mit zumindest einem Teil der Innenfläche (13) des Behälters (2) derart zusammenwirkt, dass jeweils eine Filterkammer (14) begrenzt wird, **dadurch gekennzeichnet, dass** jede der Filterscheiben (5) an ihrem Umfang in dem Behälter (2) abgestützt ist, jede Scheibe (5) am Umfang einen ringförmigen Rahmen (7) und eine dem Rahmen (7) fest zugeordnete Filterfläche (10) aufweist, wobei die Filterfläche vollständig und geschlossen den vom Rahmen umschlossenen Behälterinnenraum abdeckt, wobei der Behälter einen ihn oben verschließenden Deckel (3) aufweist und wobei jede Filterscheibe (5) mit zumindest einem oberen Zapfen (20) versehen ist, der mit einer äußeren Umfangsfläche des jeweiligen ringförmigen Rahmens (7) zusammenwirkt und wobei alle diese oberen Zapfen (20) fest mit einer Antriebswelle (21) verbunden sind, die drehbar am Deckel (3) gelagert ist.

2. Filtervorrichtung nach Anspruch 1, **dadurch gekennzeichnet, dass** die Antriebswelle (21) mittels eines Untersetzungsgetriebemittels (22) fest dem Deckel (3) zugeordnet ist.

3. Filtervorrichtung nach Anspruch 1, **dadurch gekennzeichnet, dass** der Deckel am einen seiner Enden gelenkig mit dem Behälter (2) verbunden ist.

4. Filtervorrichtung nach Anspruch 1, **dadurch gekennzeichnet, dass** Rollenmittel (18 bis 20) im wesentlichen nahe der äußeren Umfangskante des jeweiligen ringförmigen Rahmens (7) angeordnet sind, um jede Scheibe in einer im wesentlichen vertikalen Ebene zu stützen und zu führen.

5. Filtervorrichtung nach Anspruch 4, **dadurch gekennzeichnet, dass** jedes der Rollenmittel für jede Filterscheibe (5) zumindest ein Paar Leerlaufzapfen (18, 19) einschließt, die drehbar ortsunveränderlich dem unteren Teil des Behälters (2) zugeordnet sind.

6. Filtervorrichtung nach den Ansprüchen 1 bis 4, **dadurch gekennzeichnet, dass** eine endlose Kette (17) dem zylindrischen Teil (9) des ringförmigen Rahmens (7) jeder Filterscheibe (5) derart fest zugeordnet ist, dass ein Getriebemittel gebildet ist, das zum Zusammenwirken mit dem unteren Zapfenpaar (18,19) und dem oberen Zapfen (20) geeignet ist.

7. Filtervorrichtung nach Anspruch 1, **dadurch gekennzeichnet, dass** die Filterfläche (10) jeder Scheibe mittels eines Ringflansches (11) befestigt ist, der von dem ebenen Randabschnitt (8) überlagert und mit diesem fest verbunden ist.

8. Filtervorrichtung nach Anspruch 7, **dadurch gekennzeichnet, dass** jede Filterscheibe (5) eine ringförmige Dichtungspakkung (12) aufweist, die fest dem ebenen Randabschnitt (8) des Rahmens (7) zugeordnet ist, um eine wasserdichte Dichtwirkung zwischen Filterscheibe und zylindrischem Teil der Innenfläche (13) des Behälters zu ergeben.

9. Filtervorrichtung nach Anspruch 1, **dadurch gekennzeichnet, dass** der Behälter (2) in sich eine Sammelkammer (15) zum Sammeln der zu filternden Flüssigkeit aufweist, die durch einen Kanal (16) mit einer Filterkammer (14) in Verbindung steht, wobei zumindest eine Überströmkammer (27) vorgesehen ist, die mit der Sammelkammer (15) mittels einer Überströmöffnung (28) verbunden ist und zumindest einer Filterkammer (25), die mit jeder Filterkammer (14) mittels der jeweiligen Filterfläche (10) verbunden ist.

## Revendications

1. Appareil de filtration à disque rotatif, notamment pour la filtration de liquides contenant des particules solides en suspension, comprenant:
- un récipient (2) définissant une surface interne (13),
- au moins une ouverture d'entrée (23) pour le liquide à filtrer et au moins une ouverture de sortie (31) pour le liquide filtré,
- au moins une paire de disques filtreurs (5) de configuration sensiblement plane montés en rotation dans ledit récipient, lesdits disques filtreurs étant assemblés de façon coaxiale et espacés l'un de l'autre suivant leur axe,
- chaque disque (5) ayant une portion périphérique (8) coopérant avec au moins une partie de ladite surface interne (13) du récipient de façon à délimiter respectivement une chambre de filtration (14),
**caractérisé en ce que** chaque disque filtreur (5) est supporté par sa périphérie à l'intérieur dudit récipient (2), chaque disque (5) comprenant un cadre annulaire (7) ayant au moins une surface de filtration (10) fixée sur ledit cadre (7) et apte à recouvrir complètement et de façon continue la surface interne dudit cadre, ledit récipient comportant un couvercle (3) fermant sa partie supérieure, étant en outre prévu pour chaque disque de filtration (5) au moins un pignon supérieur (20) coopérant avec une portion périphérique externe du cadre annulaire respectif (7), tous les pignons supérieurs (20) étant fixés sur un arbre de commande (21) monté sur palier sur ledit couvercle (3).

2. Appareil de filtration selon la revendication 1, **caractérisé en ce que** ledit arbre de commande (21) en rotation est relié à des moyens de réduction mécaniques (22) fixés solidairement sur ledit couvercle (3).

3. Appareil de filtration selon la revendication 1, **caractérisé en ce que** ledit couvercle est monté pivotant sur un bord dudit récipient (2).

4. Appareil de filtration selon la revendication 1, **caractérisé en ce qu'**il comporte des moyens de roulement (18-20) agencés sensiblement à proximité de la portion du bord périphérique externe respectivement de chaque cadre annulaire (7) pour soutenir et guider chaque disque dans un plan sensiblement vertical.

5. Appareil de filtration selon la revendication 4, **caractérisé en ce que** lesdits moyens de roulement comprennent, pour chaque disque filtreur (5), au moins une paire de pignons (18, 19) montés en rotation libre dans la partie basse dudit récipient (2).

6. Appareil de filtration selon les revendications 1 et 4, **caractérisé en ce qu'**une chaîne sans fin (17) est fixée sur la partie cylindrique (9) du cadre annulaire (7) de chaque disque filtreur (5) de façon à définir des moyens mécaniques d'entraînement aptes à coopérer avec ladite paire de pignons inférieurs (18, 19) et ledit pignon supérieur (20).

7. Appareil de filtration selon la revendication 1, **caractérisé en ce que** la surface de filtration (10) de chaque disque est fixée au moyen d'une collerette annulaire (11) venant se superposer sur la portion de bord périphérique plane (8).

8. Appareil de filtration selon la revendication 7, **caractérisé en ce que** chaque disque filtreur (5) possède un joint de recouvrement annulaire (12) fixé solidairement sur la portion de bord périphérique plane (8) dudit cadre (7) pour réaliser un joint d'étanchéité entre le disque filtreur et une partie cylindrique de ladite surface interne (13) du récipient.

9. Appareil de filtration selon la revendication 1, **caractérisé en ce que** ledit récipient (2) comprend intérieurement une chambre collectrice (15) pour collecter le liquide à filtrer, communiquant par un conduit (16) avec une chambre de filtration (14), au moins une chambre de trop-plein (27) communiquant avec ladite chambre collectrice (15) via une ouverture de trop-plein (26) et au moins une chambre de filtrat (25) communiquant avec chaque chambre de filtration (14) respectivement via les surfaces de filtration (10).
